# EUROPEAN PATENT APPLICATION

(11) **EP 4 712 305 A1**
(43) Date of publication of application: **18.03.2026**
(21) Application number: 25195682.7
(22) Date of filing: 13.08.2025
(51) Int. Cl.: H02J 7/42, H02J 7/80, H02J 7/82, H01M 10/48

(54) **REMOTE BATTERY MANAGEMENT**

(30) Priority: 19.08.2024 US 202418808637
(71) Applicant: Schneider Electric IT Corporation, Foxboro, MA 02035 (US)
(72) Inventor: KALVAKUNTA, Murali Krishna, 560-016 Bangalore (IN); GHOSH CHOWDHURY, Sumandra, 560-067 Bangalore (IN); NAGABHUSHANRAO, Pradeep Tolakanahalli, 560070 Bangalore (IN)
(74) Representative: Plasseraud IP

(57) **Abstract**

A computer program product is provided according to some embodiments. The computer program product includes a non-transitory computer-readable storage medium storing a set of instructions, which, when executed by a computing device, causes the computing device to: (a) determine a discharge rate for a battery at a remote location based on a profile of the battery and a temperature value; (b) receive, at an initial time, a notification of the battery ceasing to be in communication with the computing system; (c) in response to receiving the notification, estimate an amount of time remaining until the battery self-discharges to a lower threshold state of charge (SoC); and (d) in response to elapsed time since the initial time reaching the estimated amount of time, output a signal from the computing system indicating a battery-discharge condition. A corresponding method, apparatus, and system are also provided.

## Description

### BACKGROUND

Uninterruptible Power Supply (UPS) units provide a backup source of power to electrical equipment in the event of a power failure. UPS units can utilize one or more batteries to provide the backup power. Although various types of batteries may be used, in recent years, use of lithium-ion batteries has become more popular due to their high energy density and long lifespan.

### SUMMARY

Methods, systems, computer-readable storage media and computer programs are provided as per the appended claims.

### BRIEF DESCRIPTION OF THE DRAWINGS

The foregoing and other objects, features and advantages will be apparent from the following description of particular embodiments of the invention, as illustrated in the accompanying drawings in which like reference characters refer to the same parts throughout the different views. The drawings are not necessarily to scale, emphasis instead being placed upon illustrating the principles of various embodiments of the invention.
Fig. 1 illustrates an example system, apparatus, computer program product, and associated data structures for use in connection with one or more embodiments.
Fig. 2 illustrates an example method in accordance with one or more embodiments.
Fig. 3 illustrates an example method in accordance with one or more embodiments.

### DETAILED DESCRIPTION

Unfortunately, batteries, such as for example lithium-ion (Li-Ion) batteries, can suffer from various limitations that impact their usage. For example, Li-Ion batteries should not be overcharged, deeply discharged, or charged too quickly, lest they be damaged. Li-Ion batteries are typically equipped with battery management systems (BMS) to protect against overcharging, deep discharge, and charging at too high of a voltage differential. The BMS may also communicate various parameters outside of the battery, such as the present state of charge (SoC). Li-Ion batteries may also suffer capacity degradation that varies based on their usage and storage. For example, storing a battery long-term at a full state of charge (e.g., 100%) tends to lead to a reduction in capacity over the course of 1-2 years, while storing the battery at approximately 30-40% charge tends to minimize or reduce the capacity reduction. Different storage temperatures also affect how quickly the battery loses its maximum charge-carrying capacity. The principles hereby described may apply to batteries other than lithium-ion batteries.

In order to overcome these problems, manufacturers sometimes manufacture and ship their batteries (whether naked or installed in a device such as a UPS unit) to customers at approximately 30% SoC to reduce any loss of maximum charge-carrying capacity while the batteries sit on customer shelves. However, because Li-Ion batteries tend to self-discharge while on the shelf (partially due to battery cell chemistry and partially due to the need to power the BMS), in order to prevent damage due to deep discharge, customers are advised to plug the batteries in every so often to check their SoC and to recharge them when necessary. Doing this properly can be difficult to ensure, however.

Similarly, UPS units may often be kept in active reserve to allow for usage in the field at short notice. These units are for example kept at a relatively high SoC (e.g., 90%) as they may be needed on short notice. If they are allowed to discharge too much while in reserve, they may not be very useful. Thus, customers are advised to plug these UPS units in every so often to check their SoC and to recharge them when necessary. Again, this can be difficult to perform efficiently.

Thus, it would be desirable to implement a tool that estimates and keeps track of the SoC of various batteries to cause them to be recharged in an efficient manner. This may be accomplished by estimating an amount of time to a minimum threshold SoC (e.g., 10%) from an initial SoC (either measured or estimated, e.g., 30%) based on performance characteristics of a battery and sending a message directing the battery to be recharged when the estimated time has elapsed. In some embodiments, the estimation is performed using a temperature and/or humidity value (e.g., reported by a facility where the battery is stored or by a device into which the battery is plugged; estimated based on a location of the battery; etc.). In some embodiments, the message may direct a user to plug in the battery. In other embodiments, the message may direct a device (e.g., a UPS unit) to awaken from a brain-dead state in order to recharge. In some embodiments, additional messages may be sent for other conditions (e.g., deep discharge, maximum SoC reached, etc.).

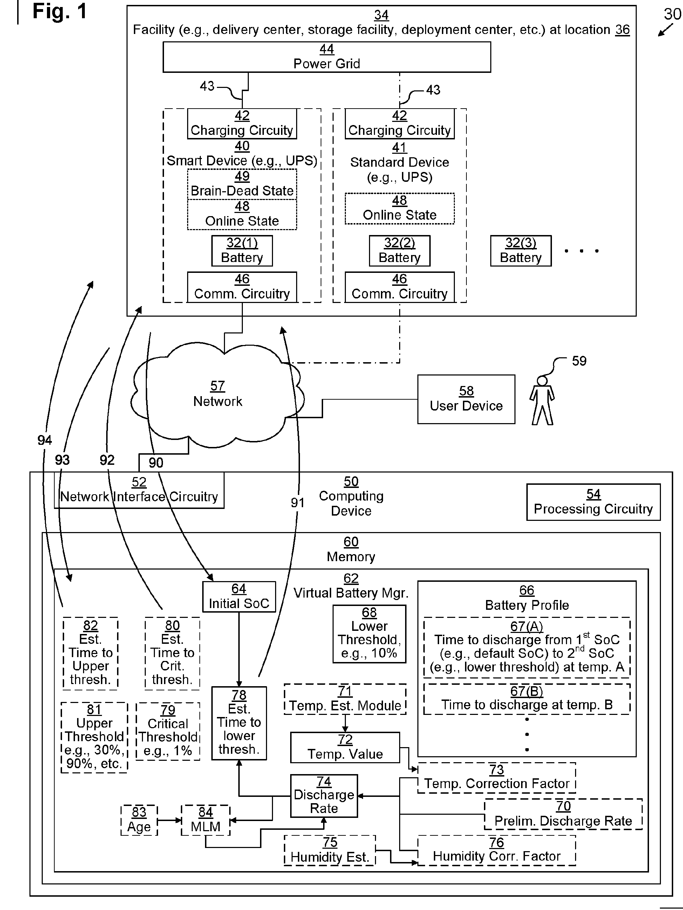

Fig. 1 depicts an example system 30 for use in connection with various embodiments described herein. System 30 includes one or more facilities 34 at which a set of batteries 32 (depicted as batteries 32(1), 32(2), 32(3), . . .) are stored. System 30 also includes one or more computing devices 50 that connect to a user device 58, operated by a user 59, and communication circuitry 46 at the facility 34 over a network 57 such as, for example, a LAN (Local Area Network), WAN (Wide Area Network), SAN (Storage Area Network), the Internet, a wireless communication network, a virtual network, a fabric of interconnected switches, etc.

Each facility 34 has a corresponding location 36 where it is (e.g., latitude and longitude coordinates) as well as a power grid 44 that provides power, over a charging line 43, to charging circuitry 42 configured to charge the batteries 32. A facility 34 may be, for example, a delivery center, a storage facility, a deployment location, etc.

In some embodiments, one or more of the batteries 32 (e.g., battery 32(1)) is placed within a smart device 40, such as a smart Universal Power Supply (UPS) unit that is configured to operate either in an operational state 48 or a brain-dead state 49. A UPS can provide backup power to one or more pieces of electrical equipment (not depicted) at the facility 34. When operating in the operational state 48, communication circuitry 46 of the smart device 40 is operational and in communication with remote computing device 50, and charging circuitry 42 may or may not be operating to charge the battery 32. When operating in the brain-dead state 49, communication circuitry 46 of the smart device 40 is in a standby mode during which it can be awoken by a wakeup signal from remote computing device 50, and charging circuitry 42 is not operational to charge the battery 32. In some embodiments, one or more of the batteries 32 (e.g., battery 32(2)) is placed within a standard device 40, such as a standard UPS unit that is configured to only operate in an operational state 48. In the case of a UPS device, the communication circuitry 46 may be located within a Network Management Card (NMC) installed within or external to that UPS device. Communication circuitry 46 may include one or more Ethernet cards, cellular modems, Fibre Channel (FC) adapters, InfiniBand adapters, wireless networking adapters (e.g., Wi-Fi), and/or other devices for connecting to network 57.

Computing device 50 may be any kind of computing device, such as, for example, a personal computer, laptop, workstation, server, enterprise server, tablet, smartphone, etc. In an example embodiment, computing device 50 is a server. In some embodiments, several computing devices 50 may be arranged in a cloud configuration to allow for redundant and/or fast access over a wide geographic range.

Computing device 50 includes processing circuitry 54, network interface circuitry 52, and memory 60. Computing device 38 may also include various additional features, such as, for example, user interface circuitry, interconnection buses, etc.

Processing circuitry 54 may include any kind of processor or set of processors configured to perform operations, such as, for example, a microprocessor, a multi-core microprocessor, a digital signal processor, a system on a chip, a collection of electronic circuits, a similar kind of controller, or any combination of the above.

Network interface circuitry 52 may include one or more Ethernet cards, cellular modems, Fibre Channel (FC) adapters, InfiniBand adapters, wireless networking adapters (e.g., Wi-Fi), and/or other devices for connecting to network 57.

Memory 60 may include any kind of digital system memory, such as, for example, random access memory (RAM), read-only memory (ROM), one-time programmable (OTP) memory, and/or flash memory. Memory 60 stores an operating system (OS, e.g., a Linux, UNIX, Windows, MacOS, or similar operating system, not depicted) and various drivers and other applications and software modules configured to execute on processing circuitry 54.

Memory 60 of computing device 50 stores a virtual battery manager (VBM) application 62, which is configured to execute on processing circuitry 54 of computing device 50 to receive information about the batteries 32 and to send charging instructions to the communication circuitry 46 or to the user device 58.

In operation, VBM 62 receives a notification 90 of a battery 32 ceasing to be in communication with VBM 62. In some embodiments, notification 90 is sent by a user 59 in response to unplugging the battery 32(2) from a standard device 41. In some embodiments, notification 90 is sent by smart device 40 in anticipation of entering the brain-dead state 49. In some embodiments, notification 90 is constructively received by no longer receiving a heartbeat signal from a device 40, 41 in which the battery 32 is installed.

In some embodiments, notification 90 also includes an initial state of charge (SoC) 64 of the battery 32, representing the SoC of the battery at the time of the notification. In other embodiments, instead of the initial SoC 64 being included within the notification 90, VBM 62 may estimate the initial SoC 64. For example, if battery 32 is located at a distribution center where it was just delivered from a manufacturer, the value of the initial SoC may be estimated to be a SoC at which batteries are charged to upon manufacture or shipping (e.g., 30% or 40%). This estimation may be performed if, for example, the battery 32(3) arrived without being installed in a device 40, 41, in which case user 59 would send the notification 90 upon receiving or inventorying the naked battery 32(3). In another embodiment, the user 59 may instead briefly install a naked battery 32(3) into a device 40, 41 just long enough for its SoC to be measured, and when the user 59 then removes that battery 32(3), the device 40, 41 can then send the notification 90 containing that SoC measurement as the initial SoC 64.

In response to notification 90, VBM 62 generates an estimated time 78 at which the SoC of the battery 32 will discharge down to a lower threshold SoC 68 (e.g., about 10%, plus-or-minus 50%, i.e., within a range of about 5% to 15%). VBM 62 keeps track of this time, and once the estimated time 78 has been reached, it sends out a signal 91 indicating a battery-discharge condition. A battery-discharge condition means that the battery 32 should be recharged soon in order to avoid damage or other long-term effects such as a reduction in charge-carrying capacity. In some embodiments, VBM 62 may send this signal 91 to the communication circuitry 46 of a smart device 40 into which the battery 32(1) is installed, so that the smart device 40 can awaken (i.e., transition from the brain-dead state 49 to the operational state 48) and initiate charging of the battery 32(1) by the charging circuitry 42 from the power grid 44. In some embodiments, VBM 62 may send this signal 91 to the user device 58 so that the user 59 (or another person) can manually connect the standard device 41 into which the battery 32(2) is installed to the power grid via cable 43 and/or plug naked battery 32(3) into a device 40, 41 that is connected to the power grid 44 to begin charging.

VBM 62 calculates the estimated time 78 by generating a discharge rate 74 for the battery 32 and using that discharge rate 74 to calculate the time to discharge from the initial SoC 64 down to the lower threshold SoC 68. VBM 62 generates the discharge rate 74 with reference to a battery profile 66 and a temperature value 72. In some embodiments, temperature value 72 is received from the facility 34 (e.g., a standard temperature to which the facility 34 is constantly set or an average temperature value over a recent period of time as reported by the facility 34). In other embodiments, temperature estimation module 71 of VBM 62 may estimate the temperature value 72 based on the location 36 of the facility 34 (e.g., by referencing weather reports or an almanac) or based on a set of temperature values reported by the facility 34 (e.g., by performing an averaging operation).

In some embodiments, battery profile 66 may include a set of specifications 67 of discharge times. As depicted, specification 67(A) specifies a discharge time from a first SoC to a second SoC at a temperature *A*, while specification 67(B) specifies a discharge time from the same first SoC to the same second SoC at a temperature *B*. For example, the first SoC may be a value close to the initial SoC (e.g., 30% or 40%), and the second SoC may be the lower threshold SoC 68, while temperatures *A* and *B* may be different temperatures within a range of expected operating temperatures (e.g., within a range of 30° F to 150° F, such as *A* = *70*° F and *B = 120*° F). In other embodiments, if the discharge rate of a battery 32 is not substantially linear with respect to SoC, then there may be more than 2 discharge times at each temperature. In other embodiments, if the discharge rate of a battery 32 is not substantially linear with respect to temperature, then there may be more than 2 temperatures with discharge times specified.

In some embodiments, VBM 62 calculates a preliminary discharge rate 70 by performing an inversion operation on a particular discharge specification 67 based on values close to the temperature value 72 and the initial SoC and lower threshold SoC 68. For example, if the temperature value 72 is *83*° F, the initial SoC 64 is *28*%, the lower threshold SoC 68 is 10%, and the discharge specification 67(A) reports a discharge time of 2 months to go from 30% to 10% at temperature *A = 80*° F, then the preliminary discharge rate 70 would be *10* percentage points per month. In these embodiments, VBM 62 also calculates a temperature correction factor 73 based on the set of discharge specifications 67 at different factors, and then applies that temperature correction factor 73 to the preliminary discharge rate 70 to calculate the discharge rate 74. For example, VBM 62 might calculate the temperature correction factor 73 for *83*° F in comparison to *80*° F to be *1.04*, in which case, the discharge rate 74 would be *10.4* percentage points per month in the above example. Applying that discharge rate 74 to the 18-percentage point difference between the initial SoC 64 of 28% and the lower threshold SoC 68 of 10%, the expected time 78 is *18* / *10.4* ≈ *1.73077* months or about *290.77* hours.

In some embodiments, a humidity estimate 75 is also used to generate a humidity correction factor 76, which may be applied to the preliminary discharge rate 70 as well, in a similar manner. Similar to the temperature value 72, the humidity estimate 75 may either be received from the facility 34 or it may be estimated based on the location 36 or another parameter, depending on the embodiment.

In some embodiments, various pieces of data such as, for example, the discharge rate 74, the initial SoC 64, the lower threshold SoC 68, and an age 83 of the battery 32 may be fed into a machine learning model (MLM) 84 to learn from past experience and amend the discharge rate 74 based on past experience and/or changes due to aging of the battery 32. MLM 74 may be, for example, a convolutional neural network having 4 input nodes, 1 output node, and a plurality of nodes within intermediate hidden layers.

In the event that the battery 32 is not reconnected to the power grid 44 for recharging after the message 91 is sent, VBM 62 may subsequently send an urgent message 92 directing that the battery 32 be urgently recharged once an estimated time 80 until the battery 32 discharges to a critically low SoC threshold 79 (e.g., about 1%, 0%, etc., "about" indicating plus-or-minus 50% or about 0.5 percentage points) has elapsed since the message 91. In some embodiments, the first message 91 may include the estimated time 80 until the battery 32 discharges to the critically low SoC threshold 79.

Once the battery 32 begins to recharge, the communication circuitry 46 of the device 40, 41 into which the battery 32 is installed may periodically send an updated report 93 of the present SoC of the battery 32 as it continues to charge. VBM 62 may subsequently send a follow-up message 94 directing that the battery 32 stop recharging once an estimate of an amount of time 82 until the battery 32 reaches an upper threshold SoC 81 is reached. In some embodiments (e.g., when the facility 34 is a delivery center or long-term storage facility), the upper threshold 81 may be similar to the initial SoC, e.g., about 30%, plus-or-minus 15% (i.e., a value within a range of 25.5% to 34.5%). In other embodiments (e.g., when the facility 34 is a deployment location where a UPS containing the battery 32 is kept on hot standby in case it is needed), the upper threshold 81 may be much higher, e.g., about 90%, plus-or-minus 5% (i.e., a value within a range of 85.5% to 94.5%).

Memory 60 of the computing device 50 may also store various other data structures used by the OS, VBM 62, temperature estimation module 71, MLM 84, and various other applications and drivers.

In some embodiments, memory 60 may also include a persistent storage portion. Persistent storage portion of memory 60 may be made up of one or more persistent storage devices, such as, for example, magnetic disks, flash drives, solid-state storage drives, or other types of storage drives. Persistent storage portion of memory 60 is configured to store programs and data even while the computing device 50 is powered off. The OS, VBM 62, temperature estimation module 71, MLM 84, and/or various other applications and drivers may be stored in this persistent storage portion of memory 60 so that they may be loaded into a system portion of memory 60 upon a system restart or as needed. The OS, VBM 62, temperature estimation module 71, MLM 84, and various other applications and drivers, when stored in non-transitory form either in the volatile or persistent portion of memory 60, each form a computer program product. The processing circuitry 54 running one or more applications thus forms a specialized circuit constructed and arranged to carry out the various processes described herein.

The user device 58 may also be any kind of computing device, such as, for example, a personal computer, laptop, workstation, server, enterprise server, tablet, smartphone, etc. In an example embodiment, user device 58 is a smart phone operated by a user 59. In some embodiments, there may be a plurality of different user devices 58, each operated by a different user 59. Each user device 58 may include any user interface (UI) circuitry needed to communicate with and connect to one or more user input devices and display screens. UI circuitry may include, for example, a keyboard controller, a mouse controller, a touch controller, a serial bus port and controller, a universal serial bus (USB) port and controller, a wireless controller and antenna (e.g., Bluetooth), a graphics adapter and port, etc. The display screen may be any kind of display, including, for example, a CRT, LCD screen, LED screen, etc. The input device may include a keyboard, keypad, mouse, trackpad, trackball, pointing stick, joystick, touchscreen (e.g., embedded within the display screen), microphone/voice controller, etc. In some embodiments, instead of being external to user device 58, the input device and/or display screen may be embedded within the user device 58 (e.g., a cell phone or tablet with an embedded touchscreen).

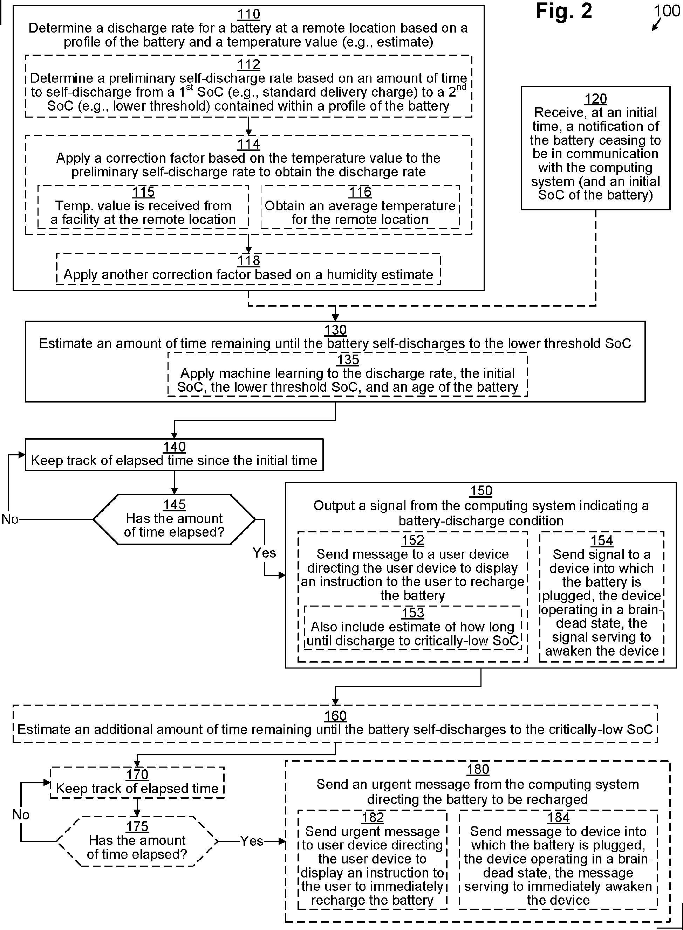

Fig. 2 illustrates an example method 100 performed by a system 30 for remote battery management. It should be understood that any time a piece of software (e.g., OS, VBM 62, temperature estimation module 71, MLM 84, etc.) is described as performing a method, process, step, or function, what is meant is that a computing device (e.g., computing device 50, devices 40, 41, user device 58, etc.) on which that piece of software is running performs the method, process, step, or function when executing that piece of software on its processing circuitry 54. It should be understood, that one or more of the steps or sub-steps of method 100 may be omitted in some embodiments. Similarly, in some embodiments, one or more steps or sub-steps may be combined or performed in a different order. Dashed lines indicate that a step or sub-step is either optional or representative of alternate embodiments or use cases.

In step 110, VBM 62 determines a discharge rate 74 for a battery 32 at a remote location 36 based on a profile 66 of the battery 32 and a temperature value 72 (e.g., a temperature estimate). In some embodiments, step 110 includes one or more of sub-steps 112, 114, 118.

In sub-step 112, VBM 62 determines a preliminary self-discharge rate 70 based on an amount of time 67(A) to self-discharge from a first SoC (e.g., standard SoC at time of delivery from the manufacturer, such as 30%) to a second SoC (e.g., lower threshold 68), the discharge specification 67 being contained within a profile 66 of the battery 32. The profile 66 may be published, for example, by the manufacturer of the battery 32 to describe batteries of the same type. For example, if the discharge specification 67 notes that the battery 32 is expected to discharge from 30% SoC to 10% SoC in 25 days at 70° F, then the preliminary self-discharge rate 70 at 70° F is 20 percentage points divided by 25 days or about 0.8 percentage points per day.

In sub-step 114, VBM 62 applies a temperature correction factor 73 based on the temperature value 72 to the preliminary self-discharge rate 70 to obtain the discharge rate 74. Thus, if the temperature value 72 is 65° F and the preliminary discharge rate 70 of 0.8 is based on a temperature of 70° F, then the temperature correction factor 73 might be 0.92, for example. Applying the temperature correction factor 73 to the preliminary self-discharge rate 70 may be performed using multiplication, so the discharge rate 74 is 0.8 x 0.92 = 0.736 percentage points per day.

In some embodiments, sub-step 114 includes sub-step 115, while in other embodiments, sub-step 114 includes sub-step 116. In sub-step 115, VBM 62 receives the temperature value 72 from the facility 34. In sub-step 116, temperature estimation module 71 obtains an average temperature for the remote location 36, using the obtained average as the temperature value 72. In one embodiment, temperature estimation module 71 obtains the average temperature by looking up the location 36 in weather reports or an almanac or another similar source. In another embodiment, temperature estimation module 71 obtains the average temperature by receiving and averaging a set of temperature values reported by the facility 34.

In sub-step 118, VBM 62 further applies a humidity correction factor 76 based on a humidity estimate 75 to the preliminary self-discharge rate 70 (in addition to temperature correction factor 73 applied in sub-step 116) to obtain the discharge rate 74. Thus, if the humidity estimate 75 is a dewpoint of 55° F and the preliminary discharge rate 70 of 0.8 is based on a dewpoint of 68° F, then the humidity correction factor 76 might be 0.9, for example. Further applying the humidity correction factor 76 to the preliminary self-discharge rate 70 may be performed using multiplication, so the discharge rate 74 is 0.736 x 0.9 = 0.6624 percentage points per day.

Step 120 is performed in parallel with step 110. That is to say that step 110 may precede step 120, step 120 may precede step 110, or steps 110, 120 may be performed in a simultaneous or overlapping manner. In step 120, VBM 62 receives, at an initial time, a notification 90 of the battery 32 ceasing to be in communication with the computing device 50. In some embodiments, step 120 may also include VBM 62 receiving the initial SoC 64 of the battery 32. In other embodiments (e.g., in the case of a naked batter 32(3) not installed in any device 40, 41), step 120 may avoid the VBM 32 explicitly receiving the initial SoC 64 of the battery 32. In some embodiments, notification 90 is sent by a user 59 in response to unplugging the battery 32(2) from a standard device 41. In some embodiments, notification 90 is sent by smart device 40 in anticipation of entering the brain-dead state 49. In some embodiments, notification 90 is constructively received by no longer receiving a heartbeat signal from a device 40, 41 in which the battery 32 is installed; in such embodiments, either the initial SoC 64 is not explicitly received by the VBM 62 or the heartbeat signal includes an SoC measurement, the SoC measurement from the last heartbeat signal serving as the initial SoC 64.

In step 130, VBM 62 estimates an amount of time 78 remaining until the battery 32 self-discharges to the lower threshold SoC 68. Thus, if the initial SoC is 33% and the discharge rate 74 is 0.6624 percentage points per day, the amount of time for the battery 32 to self-discharge to the lower threshold SoC 68 of 10% is 33-10=23 percentage points divided by 0.6624 percentage points per day, which is about 34.72 days.

In some embodiments, step 130 may include sub-step 135. In sub-step 135, VBM 62 applies machine learning (e.g., by feeding values into MLM 84) to the discharge rate 74, the initial SoC 64, the lower threshold SoC 68, and the age 83 of the battery 32 to yield a corrected version of the discharge rate 74.

In step 140, VBM 62 keeps track of the elapsed time since the initial time of the notification message 90. In step 145, VBM 62 compares the elapsed time to the amount of time 78. If the amount of time 78 has not yet elapsed, operation returns back to step 140. If the amount of time 78 has elapsed, operation instead proceeds with step 150.

In step 150, VBM 62 outputs out a signal 91 indicating a battery-discharge condition (e.g., directing the battery 32 to be recharged). In some embodiments, step 150 may include sub-step 152, while in other embodiments, step 150 may include sub-step 154. In sub-step 152, VBM 62 sends the signal 91 to a user device 58 directing the user device 58 to display an instruction to the user 59 to recharge the battery 32. In some embodiments, sub-step 152 may include sub-step 153, in which the signal 91 to the user device 58 also includes an estimate 80 of how long until the battery 32 discharges to a critically-low SoC threshold 79 (e.g., 1% SoC). Alternatively, in sub-step 154, VBM 62 sends the signal 91 to a device 40 into which the battery 32(1) is installed, the device 40 operating in a brain-dead state 49, the signal 91 serving to awaken the device 40 into an operational state 48 as well as to automatically activate the charging circuitry 42.

In some embodiments, steps 160, 170, 175, and 180 are also performed after step 150.

In step 160, VBM 62 estimates an additional amount of time 80 remaining until the battery 32 self-discharges to the critically-low SoC threshold 79. Step 160 is similar to step 120, except that the target is the critically-low SoC threshold 79 (e.g., 1%) rather than the lower threshold SoC 68 (e.g., 10%). If the battery profile 66 indicates that the discharge rate is nonlinear with respect to the SoC, then a step similar to step 110 may also be performed to more accurately assess the discharge rate 74 over the lower range, e.g., 10%→1% instead of 30%->10%.

It should be understood that in some embodiments, step 160 may be performed as an additional sub-step within sub-step 152, prior to sub-step 153.

In step 170, VBM 62 keeps track of the elapsed time since sending signal 91. In step 175, VBM 62 compares the elapsed time to the estimated time 80. If the estimated time 80 has not yet elapsed, operation returns back to step 170. If the estimated time 80 has elapsed, operation instead proceeds with step 180.

In step 180, VBM 62 sends out an urgent message 92 directing the battery 32 to be urgently recharged. In some embodiments, step 180 may include sub-step 182, while in other embodiments, step 180 may include sub-step 184. In sub-step 182, VBM 62 sends the urgent message 92 to a user device 58 directing the user device 58 to display an instruction to the user 59 to immediately recharge the battery 32. Alternatively, in sub-step 184, VBM 62 sends the urgent message 92 to a smart device 40 into which the battery 32(1) is installed, the device 40 operating in a brain-dead state 49, the urgent message 92 serving to awaken the device 40 into an operational state 48 as well as to automatically activate the charging circuitry 42.

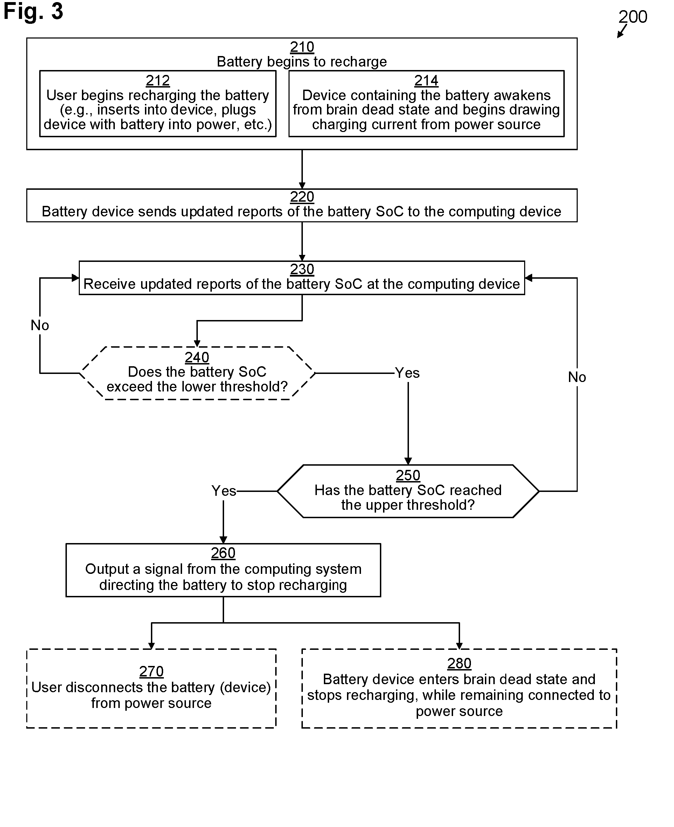

Fig. 3 illustrates an example method 200 performed by a system 30 once the battery 32 begins recharging. Method 200 may be performed after method 100.

In step 210, a battery 32 begins recharging. In some embodiments, step 210 may include sub-step 212, while in other embodiments, step 210 may include sub-step 214. In sub-step 212, a user 59 initiates recharging of the battery 32. For example, the user 59 may place a naked battery 32(3) into a device 40, 41 to begin recharging. As another example, user 59 may physically plug a cable 43 of a standard device 41 (e.g., a standard UPS unit) into which a battery 32(2) is installed into the power grid 44 to initiate charging. Alternatively, in sub-step 214, a smart device 40 into which a battery 32(1) is installed awakens from the brain dead state 49 into the operational state 48 and its charging circuitry 42 automatically begins drawing charging current from the power grid 44 over connection 43 and providing that charging current to the battery 32(1).

In step 220, the communication circuitry 46 of the device 40, 41 into which the battery 32 is installed periodically sends an updated report 93 of the present SoC of the battery 32 as it continues to charge to VBM 62.

In step 230, VBM 62 receives the updated reports 93 of the present SoC of the battery 32.

In some embodiments, in step 240, VBM 62 checks whether or not the present SoC of the battery 32 exceeds the lower threshold SoC 68. If so, operation proceeds with step 250. Otherwise, operation returns back to step 230.

In step 250, VBM 62 checks whether or not the present SoC of the battery 32 has yet reached the upper threshold SoC 81. If so, operation proceeds with step 260. Otherwise, operation returns back to step 230.

In step 260, VBM 62 sends a follow-up signal 94 (e.g., a message) directing that the battery 32 stop recharging. In some embodiments, follow-up signal 94 is sent to a user device 58 as in sub-steps 152, 182. In other embodiments, follow-up signal 94 is sent to a smart device 40 into which the battery 32(1) is installed, the smart device 40 operating in an operational state 48, the follow-up message 94 serving to instruct the device 40 to automatically deactivate the charging circuitry 42 and to enter a brain-dead state 49. In yet other embodiments, follow-up signal is sent both to a user device 58 as in sub-steps 152, 182 and to a smart device 40 into which the battery 32(1) is installed.

In some embodiments, in step 270, the user 59, after seeing the follow-up signal 94 displayed at user device 58, either removes the battery 32(2) from the device 41 into which it was installed or disconnects that device 41 from the power grid 44.

In some embodiments, in step 280, the smart device 40 into which the battery 32(1) is installed stops the charging circuitry 42 from charging the battery 32(1) and enters a brain-dead state 49, while the charging circuitry 42 remains connected to the power grid 44 (without drawing charging current).

While various embodiments of the invention have been particularly shown and described, it will be understood by those skilled in the art that various changes in form and details may be made therein without departing from the spirit and scope of the invention as defined by the appended claims.

It should be understood that although various embodiments have been described as being methods, software embodying these methods is also included. Thus, one embodiment includes a tangible computer-readable medium (such as, for example, a hard disk, a floppy disk, an optical disk, computer memory, flash memory, etc.) programmed with instructions, which, when performed by a computer or a set of computers, cause one or more of the methods described in various embodiments to be performed. Another embodiment includes a computer which is programmed to perform one or more of the methods described in various embodiments.

Furthermore, it should be understood that all embodiments which have been described may be combined in all possible combinations with each other, except to the extent that such combinations have been explicitly excluded.

Finally, nothing in this Specification shall be construed as an admission of any sort. Even if a technique, method, apparatus, or other concept is specifically labeled as "background" or as "conventional," Applicants make no admission that such technique, method, apparatus, or other concept is actually prior art, such determination being a legal determination that depends upon many factors, not all of which are known to Applicants at this time.

## Claims

1. A method of remote battery management performed by a computing system (50), the method comprising:
determining (110) a discharge rate (74) for a battery (32) at a remote location (36) based on a profile (66) of the battery and a temperature value (72);
receiving (120), at an initial time, a notification (90) of the battery ceasing to be in communication with the computing system;
in response to receiving the notification, estimating (130) an amount of time (78) remaining until the battery self-discharges to a lower threshold state of charge, SoC (68); and
in response to elapsed time since the initial time reaching the estimated amount of time, outputting (150) a signal (91) indicating a battery-discharge condition.

2. The method of claim 1, wherein outputting the signal includes sending a message from the computing system to a user device (58), the message directing the user device to display an instruction to the user (59) to recharge the battery.

3. The method of claim 2, wherein the message from the computing system includes a further estimate (80) of how long until the battery self-discharges to a critically-low SoC (79).

4. The method of any of the above claims, wherein outputting the signal includes sending the signal from the computing system to a device (40) into which the battery is plugged, the device operating in a brain-dead state (49), the signal serving to awaken the device.

5. The method according to any of the above claims, further comprising:
estimating an additional amount of time remaining until the battery self-discharges to a critically-low SoC after reaching the lower threshold SoC; and
in response to elapsed time since outputting the signal reaching the estimated additional amount of time, sending an urgent message (92) from the computing system directing the battery to be recharged.

6. The method according to any of the above claims, further comprising:
receiving, in response to the battery having begun to be recharged, updated reports (93) of the SoC of the battery; and
in response to receiving an updated report of the SoC of the battery reaching an upper threshold SoC (81), outputting another signal (94) from the computing system directing the battery to stop recharging.

7. The method according to any of the above claims, wherein determining the discharge rate includes:
determining a preliminary self-discharge rate (70) based on an amount of time (67) to self-discharge from a first SoC to a second SoC contained within the profile of the battery; and
applying a correction factor (73) based on the temperature value to the preliminary self-discharge rate to obtain the discharge rate.

8. The method of claim 7, wherein determining the discharge rate further includes applying another correction factor (76) based on a humidity estimate (75) to obtain the discharge rate.

9. The method of any of the above claims, further comprising receiving, at the initial time, an initial SoC (64) of the battery.

10. The method according to any of the above claims, wherein estimating the amount of time remaining until the battery self-discharges to the lower threshold SoC includes applying (135) machine learning to the discharge rate, the initial SoC, the lower threshold SoC, and an age (83) of the battery.

11. The method of any of the above claims, wherein the temperature value is received from a facility (34) at the remote location.

12. The method of any of the above claims, further comprising determining the temperature value by estimating an average temperature for the remote location.

13. A computer-readable storage medium storing instructions, which, when performed by processing circuity of a computing system, cause the computing system to operate according to any of the above method claims.

14. A system comprising:
a battery; and
a computing system remote from the battery, the computing system including processing circuitry and memory configured to operate according to any of method claims 1 to 12.

15. A computer program comprising instructions which, when the program is executed by a computing system, cause the computing system to carry out the method of any of claims 1 to 12.
